Europäisches Patentamt

European Patent Office

Office européen des brevets

(19)

(11) Veröffentlichungsnummer : **0 439 719 B1**

(12)

# EUROPÄISCHE PATENTSCHRIFT

(45) Veröffentlichungstag der Patentschrift :
**13.04.94 Patentblatt 94/15**

(51) Int. Cl.⁵ : **C08K 5/3492,** C08L 71/00,
C08L 75/04

(21) Anmeldenummer : **90123036.7**

(22) Anmeldetag : **01.12.90**

(54) **Melaminzubereitung und stabile Dispersion von Melamin in Polyetherolen.**

(30) Priorität : **30.01.90 AT 197/90**

(43) Veröffentlichungstag der Anmeldung :
**07.08.91 Patentblatt 91/32**

(45) Bekanntmachung des Hinweises auf die
Patenterteilung :
**13.04.94 Patentblatt 94/15**

(84) Benannte Vertragsstaaten :
**AT BE CH DE DK ES FR GB GR IT LI LU NL SE**

(56) Entgegenhaltungen :
**EP-A- 0 104 350**
**EP-A- 0 391 116**

(56) Entgegenhaltungen :
**DATABASE WPI, Nr. 80-75830C, Derwent Publications Ltd. London & JP-A-55 116 720 (MITSUBISHI CHEM. IND. CO., LTD.) 09-09-1980**
**CHEMICAL ABSTRACTS, vol. 103, no. 22, 02 Dezember 1985 Columbus, Ohio, USA. Seite 53; ref.no. 179366U & JP-A-60 108 440 (YUKA MELAMINE CO., LTD.) 13-06-1985**

(73) Patentinhaber : **Chemie Linz Gesellschaft m.b.H.**
**St.Peter-Strasse 25**
**A-4021 Linz (AT)**

(72) Erfinder : **Horacek, Heinrich, Dr.**
**Bockgasse 43**
**A-4020 Linz (AT)**

(74) Vertreter : **Kunz, Ekkehard, Dr.**
**Chemie Linz Ges.m.b.H. Abteilung Patente St. Peter-Str. 25**
**A-4021 Linz (AT)**

## Beschreibung

Die Erfindung betrifft eine Melamin und Cyanursäure, Chloride oder Bromide der Cyanursäure oder der Isocyanursäure, Ammelin oder Ammelid enthaltende Melaminzubereitung, eine daraus hergestellte stabile Dispersion In Polyetherolen sowie deren Verwendung zur Herstellung von Polyurethanschaumstoffen.

Bei der Herstellung von flammfesten Polyurethanschaumstoffen erweist es sich als besonders vorteilhaft, Melamin als Flammschutzmittel einzusetzen. Dabei wird eine Dispersion von Melamin in einem Polyol mit Isocyanat, Schaumbildnern sowie üblichen Zusatz- und Hilfsstoffen, umgesetzt. Ein Nachteil der Melamin-Polyol-Dispersionen liegt darin, daß sie sofort verarbeitet werden müssen, da das Melamin bereits nach kurzer Zeit sedimentiert. Aus der DE-OS-29 32 304 ist bekannt, daß die Lagerstabilität von Melamin-Polyol-Dispersionen durch Verwendung von feinstgemahlenem Melamin mit einer Teilchengröße von unter 0,01 mm sowie durch Verwendung von Kieselsäure, perfluorierten Alkylcarbonsäuren, Alkylsulfonsäuren, Polyperfluorätherolen oder Fettalkoholsulfaten als Stabilisatoren erhöht werden kann. Der Nachteil dieser Polyol-Dispersionen liegt vor allem darin, daß das Melamin in einem zusätzlichen Verfahrensschritt mit hohem Energieaufwand gemahlen werden muß. Ein weiterer Nachteil dieser kleinen Partikel besteht darin, daß sie Dispersionen mit hohen Viskositäten und dadurch bedingter schwieriger Handhabung und Weiterverarbeitung ergeben (K. E. J. Barrett, Dispersion Polymerisation in Organic Media, Fig. 6, 2, John Wiley, London 1975). Weiters besitzen Schaumstoffe, die aus Dispersionen mit derart kleinen Partikeln hergestellt werden, schlechte mechanische Eigenschaften (M. Genz, O. M. Grace, S. Gagnon, PRI-Urethane Group International Symposium, "New Flame Resistant Flexible Foams" (14. Oktober 1987).

Die Aufgabe der Erfindung lag nun darin, eine stabile, nicht schäumende Melamin-Polyol-Dispersion sowie eine Melaminzubereitung zur Herstellung dieser Dispersion zu finden, bei der diese Nachteile nicht auftreten. Überraschenderweise wird die Aufgabe durch Melaminzubereitungen bzw. daraus hergestellte Melamin-Polyol-Dispersionen mit einem Gehalt an Cyanursäure, Chloriden oder Bromiden der Cyanursäure oder der Isocyanursäure, Ammelin oder Ammelid gelöst.

Ähnliche Melamin-Polyol-Dispersionen, die jedoch mit Harnstoff oder Harnstoffderivaten stabilisiert sind, werden in der EP-A-391116 beschrieben.

Gegenstand der vorliegenden Erfindung ist demnach eine Melaminzubereitung aus 80 bis 99,9 Gew.%, bevorzugt 80 bis 99,3 Gew. % Melamin mit einer mittleren Korngröße von 0,01 bis 0,1 mm und 0,1 bis 20 Gew.%, bevorzugt 0,7 bis 20 Gew.% Cyanursäure, Chloriden oder Bromiden der Cyanursäure oder der Isocyanursäure, Ammelin oder Ammelid zur Herstellung einer stabilen Dispersion in Polyetherolen, wobei Melamin von 0 bis 50 % seines Gewichtes durch weitere Flammschutzmittel ersetzt sein kann.

Ein weiterer Gegenstand der Erfindung ist die Verwendung dieser Melaminzubereitung aus 80 bis 99,9 Gew.%, bevorzugt 80 bis 99,3 Gew.% Melamin mit einer mittleren Korngröße von 0,01 bis 0,1 mm und 0,1 bis 20 Gew.%, bevorzugt 0,7 bis 20 Gew.% Cyanursäure, Chloriden oder Bromiden der Cyanursäure oder der Isocyanursäure, Ammelin oder Ammelid zur Herstellung einer stabilen Dispersion in Polyetherolen, wobei Melamin von 0 bis 50 % seines Gewichtes durch weitere Flammschutzmittel ersetzt sein kann.

Ein weiterer Gegenstand der Erfindung ist eine stabile Dispersion von Melamin in Polyetherolen mit einem Gehalt von 20 bis 70 Gew.% Melamin sowie gegebenenfalls weiteren üblichen Zusätzen, die dadurch gekennzeichnet ist, daß sie 0,1 bis 5 Gew.% Cyanursäure, Chloride oder Bromide der Cyanursäure oder der Isocyanursäure, Ammelin oder Ammelid enthält, daß die mittlere Korngröße des Melamins bei 0,01 bis 0,1 mm liegt und daß Melamin von 0 bis 50 % seines Gewichtes durch weitere Flammschutzmittel ersetzt sein kann.

Das eingesetzte Melamin ist im Handel erhältlich, beispielsweise von Chemie Linz, ein zusätzlicher Mahlvorgang zur Reduzierung der Teilchengröße ist nicht erforderlich. Unter mittlerer Korngröße von 0,01 bis 0,1 mm ist zu verstehen, daß mindestens 90 Gew.% der Partikel eine Korngröße von 0,01 bis 0,1 mm besitzen (DIN 66141). Der Melamingehalt der Dispersion liegt bei 20 bis 70 Gew.%, wobei ein hoher Melamingehalt im Schaumstoff eine erhöhte Flammfestigkeit des Endproduktes, jedoch auch eine höhere Viskosität der Dispersion bewirkt. Eine Dispersion mit einem Feststoffgehalt von beispielsweise 50 Gew.%, bestehend aus Melamin und Cyanursäure, Chloriden oder Bromiden der Cyanursäure oder Isocyanursäure, Ammelin oder Ammelid besitzt eine Viskosität, die etwa 5 bis 15 mal höher ist als jene des eingesetzten Polyetherols.

Cyanursäure, Chloride oder Bromide der Cyanursäure oder der Isocyanursäure sind im Handel, beispielsweise bei Degussa oder Monsanto, erhältlich. Es können die Mono-, Di- und Trichloride bzw. Mono-, Di- oder Tribromide bzw. deren Gemische verwendet werden. Ammelid (2-Amino-4,6-Dihydroxy-1,3,5-Triazin) und Ammelin (2,4-Diamino-6-Hydroxy-1,3,5-Triazin) sind bei Chemie Linz erhältlich.

Cyanursäure, Chloride oder Bromide der Cyanursäure oder der Isocyanursäure, Ammelid oder Ammelin werden in Mengen von 0,1 bis 5 Gew.%, bevorzugt 0,5 bis 5 Gew.%, bezogen auf die fertige Dispersion, eingesetzt. Bei hohen Melamingehalten der Dispersion sind geringere Zusätze an Cyanursäure bzw. deren Derivaten erforderlich, bei niederen Melamingehalten der Dispersion werden höhere Zusätze an Cyanursäure bzw. deren Derivaten zugegeben. Beispielsweise werden bei einem Melamingehalt der Dispersion von etwa 20 bis 40 Gew.% etwa 3 bis 5 Gew.% Cyanursäure bzw. deren Derivate, bei einem Melamingehalt von etwa 40 - 60 Gew.% etwa 0,3 - 3 Gew.% und bei einem Melamingehalt von etwa 60 - 70 Gew.% etwa 0,1 - 0,5 Gew.% Cyanursäure bzw. deren Derivate zugesetzt.

Zusätzlich zu der die Dispersion stabilisierenden Wirkung steigt mit höherem Gehalt an Cyanursäure bzw. deren Derivaten ebenfalls die Viskosität der Dispersion. Die Viskosität der erfindungsgemäß stabilisierten Dispersion ist jedoch geringer als jene vergleichbarer bekannter Dispersionen mit einer Teilchengröße des Melamins von unter 0,01 mm.

Als Polyetherole kommen alle in der Polyurethan-Herstellung gebräuchlichen, beispielsweise Polymerisate bzw. Polykondensate aus Ethylenoxid, Propylenoxid oder Tetrahydrofuran, in Frage. Das Molekulargewicht der Polyetherole liegt üblicherweise im Bereich von etwa 200 bis 6 500 g/mol, die OH-Zahl bei etwa 25 bis 600, bevorzugt bei 20 bis 40. Es können auch polymermodifizierte Polyole, wie sie beispielsweise in der GB-A-21 63 762 beschrieben sind, und die zur Beeinflussung der Zellstruktur bei der Herstellung von Polyurethan-Schäumen dispergierte Polymere, z. B. Alkanolamin-Isocyanat-Polyadditionspolymere, enthalten, verwendet werden. Derartige polymermodifizierte Polyetherole sind beispielsweise Desmophen[R] 3699 oder 7652 von Bayer, Multranol[R] 9225 von Mobay, Niax[R] 34 - 28 von UCC, Polyurax[R] 1408, Voranol[R] 8020 von DOW oder Pluracol[R] 581 von BWC. Nichtmodifizierte Polyetherole sind z. B. Desmophen[R] 3900 von Bayer oder Caradol[R] 36-3 von Shell. Es ist auch möglich, Gemische verschiedener Polyole zu verwenden.

Die Melaminzubereitung bzw. die Melamin-Polyetherol-Dispersion kann gegebenenfalls zusätzlich zum Melamin noch weitere Flammschutzmittel, beispielsweise phosphor- und/oder halogenhältige, enthalten, wie z.B N-2,4,6-Tribromphenylmaleinimid (Chemie Linz), Bisdibromneopentylglykolborsäureguanidin (SA 136 von Fa. Chemie Linz), Tris-1,3-dichlorpropylphosphat (Amgard[R] TDCP/LV von Albright und Wilson), Phosphorsäure-bis(2-chlorethyl)ester, Diester mit 2,2-Bis-chlormethyl-1,3-propandiol, Tetrakis (2-chlorethyl)ethylendiphosphat (Thermolin 101, Fa. Olin) und Trisdichlorethylphosphat (Disflamoll TCA von Bayer), wobei Bisdibromneopentylglykolborsäureguanidin besonders gute Ergebnisse bringt.

Als Treibmittel können üblicherweise Wasser oder halogenierte Kohlenwasserstoffe, beispielsweise Trichlorfluormethan, Dichlordifluormethan oder Methylenchlorid der Dispersion zugesetzt werden.

Weiters können die Melamin-Polyetherol-Dispersionen Zusätze enthalten, die bei der Polyurethanherstellung üblich sind, wie z.B. Katalysatoren, Kettenverlängerungsmittel, Vernetzer, Schaumstabilisatoren, Porenregler, Stabilisatoren, Füll- und Hilfsstoffe. Als Katalysatoren kommen beispielsweise Zinnoctoat, Dibutylzinndilaurat oder Diazobicyclooctan (z. B. Dabco[R] 33LV von Fa. Air Products), als Schaumstabilisatoren Polysiloxan-Polyoxyalkylen-Copolymere wie z.B. Silicon 5043 von Dow Corning, als Vernetzer Diethanolamin oder Glycerin, als Kettenverlängerungsmittel Butandiol oder Ethylenglykol in Frage.

Die erfindungsgemäßen Dispersionen sind einfach herzustellen und schäumen nicht. Sie werden durch einfaches Einrühren von Melamin, Cyanursäure bzw. deren Derivaten und den jeweils gewünschten Zusätzen bei Temperaturen von etwa 20 bis 80°C und anschließende Homogenisierung, beispielsweise unter Verwendung eines gewöhnlichen Ankerrührers, hergestellt. Die Verwendung einer Kugelmühle ist nicht erforderlich.

Die Dispersionen werden bevorzugt zur Herstellung von flammfesten Polyurethan-Schaumstoffen verwendet. Die Herstellung der Schaumstoffe gelingt beispielsweise wie in DE-OS-29 32 304 beschrieben, durch Umsetzung der Dispersionen mit einem Isocyanat z. B mit Diphenylmethandiisocyanat oder Toluylidendiisocyanat unter Zusatz von Schaumbildnern. Die verwendete Dispersion kann vor der Umsetzung gegebenenfalls mit einem Polyol weiter verdünnt werden. Da die Dispersionen keine grenzflächenaktiven Substanzen, wie beispielsweise Emulgatoren oder Seifen enthalten, verläuft die Umsetzung kontrolliert, unter Ausbildung einer einheitlichen Zellstruktur ohne störende Wirkung auf das durch Schaumstabilisatoren unterstützte Schäumverhalten.

Vergleichsbeispiel V1:

In einem 1 m³ Rührkessel mit Ankerrührer wurden 325 kg eines polymermodifizierten Polyetherols mit einer bei 25 °C gemessenen Viskosität von 1500 m Pas und einer OH-Zahl von 31 (entsprechend Desmophen[R] 7652 von Bayer) vorgelegt und bei 80 °C und einer Rührgeschwindigkeit von 60 Upm während 30 min 325 kg Melamin, entsprechend einem Melamingehalt der Dispersion von 50 Gew.%, eingerührt. Die Rührgeschwindigkeit ist dabei so gewählt, daß nur eine schwach ausgebildete Trombe entsteht. Anschließend wurde zur Homogenisierung der Dispersion 120 min weitergerührt. Die erhaltene Dispersion besaß eine Viskosität von 14 000 mPas (20 °C) und sedimentierte innerhalb von 3 Tagen.

Beispiel 1:

In einem 1 m³ Rührkessel mit Ankerrührer wurden 325 kg eines polymermodifizierten Polyetherols, entsprechend Desmophen[R] 7652 von Bayer, vorgelegt und bei 80 °C und einer Rührgeschwindigkeit von 60 Upm während 30 min ein Gemisch aus 9,75 kg Cyanursäure (Fa. CdF) mit einer mittleren Korngröße von unter 0,2 mm und 315,25 kg Melamin (Fa. Chemie Linz) eingerührt. Das verwendete Melamin wies eine Korngrößenverteilung auf, bei der 95 Gew.% der Körner eine Korngröße von 0,01 bis 0,1 mm besaßen (DIN 66141). Anschließend wurde zur Homogenisierung der Dispersion 120 min weitergerührt. Die Viskosität der erhaltenen Dispersion lag bei 15 000 mPas (20 °C), sie war länger als 6 Monate chemisch und physikalisch stabil ohne zu sedimentieren.

Beispiele 2 bis 7

Analog zu Beispiel 1 wurden Melamindispersionen mit Zusatz der in Tabelle 1 angegebenen Mengen von Melamin und Cyanursäure bzw. deren Derivaten hergestellt.

Die Stabilität aller Dispersionen lag bei über 6 Monaten, ohne daß Sedimentation eintrat.

Herstellung von Schaumstoffen

Die gemäß Beispiel 1 bis 7 hergestellten Melamin-Polyetherol-Dispersionen wurden jeweils gemäß folgender Rezeptur vermischt:

80 Gew.Teile Melamin-Dispersion, 60 Gew. Teile des jeweiligen Polyols, 1,5 Gew.Teile Wasser als Schäummittel, 0,05 Gew.Teile Dibutylzinndilaurat als Katalysator, 0,5 Gew.Teile Diethanolamin 85%ig als Vernetzer und 0,08 Gew.Teile Dabco[R] 33LV (33%ige Lösung von Triethylendiamin in Dipropylenglykol, Fa. Air Products) als Katalysator, 1,0 Gew.Teile Silicon 5043 (Dow Corning) als Schaumstabilisator, 5 Gew.Teile Thermolin[R] 101 (Tetrakis(2-chlorethyl)ethylendiphosphat, Fa. Olin) und 10 Gew.Teile Frigen[R] 11 (Hoechst).

Diese Mischung wurde anschließend während 3 sec. mit 22 Gew.Teilen Toluylidendiisocyanat (TDI 80 von Bayer) verrührt und zur Bildung des Polyurethanschaumes in eine offene Blockform gegossen. Die Topfzeit lag jeweils bei etwa 20 sec, die Steigzeit bei 60 sec und die Fadenziehzeit bei 90 sec.

Der erhaltene Polyurethanschaum wurde auf seine Zugfestigkeit (DIN 53571), Weiterreißfestigkeit (DIN 53575), Druckverformungsrest bei 90 % (DIN 53572), Dichte (DIN 53420) sowie auf sein Brandverhalten (BS 5852-2) geprüft. Gemäß BS 5852-2 werden etwa 1 kg des Polyurethanschaumstoffes mit Crib 5 beflammt, wobei ein maximaler Gewichtsverlust von 60 g zulässig ist. Die Werte sind gemeinsam mit den mechanischen Eigenschaften der Weichschäume in Tabelle 2 zusammengestellt.

Tabelle 1

Melamindispersionen in Polyetherolen

| | Melamin | Cyanursäure/ Derivate* | Polyetherol | Viskosität/20° | Dichte/20°C |
|---|---|---|---|---|---|
| | (Gew.%) | (Gew.%) | | (mPas) | (g/ml) |
| V1 | 50 | - | Desmophen 7652 | 14 000 | 1,22 |
| 1 | 48,5 | 1,5 CS | Desmophen 7652 | 15 000 | 1,22 |
| 2 | 48 | 2 CS | Desmophen 7652 | 20 000 | 1,22 |
| 3 | 47 | 3 CS | Desmophen 7652 | 18 500 | 1,22 |
| 4 | 48 | 2 AN | Desmophen 7652 | 14 500 | 1,22 |
| 5 | 48 | 2 AD | Desmophen 7652 | 16 500 | 1,22 |
| 6 | 48,5 | 1,5 TC | Desmophen 7652 | 18 000 | 1,22 |
| 7 | 48,5 | 1,5 CC | Desmophen 7652 | 18 500 | 1.22 |

\*    CS   Cyanursäure

AN   Ammelin

AD   Ammelid

TC   Trichlorisocyanursäure

CC   Cyanurchlorid

EP 0 439 719 B1

Tabelle 2

Weichschaumstoffe

|  | Dichte (kg/m³) | Weiterreiß-festigkeit (N/m) | Zugfestig-keit (kPa) | Druckver-formungsrest bei 90 % Ver-formung (%) | Brandverhalten Gewichtsver-lust (g) | Proben-gewicht (g) |
|---|---|---|---|---|---|---|
| 1 | 39 | 275 | 95 | 10 | 20 | 1005 |
| 2 | 40 | 280 | 102 | 9 | 16 | 1010 |
| 3 | 41 | 285 | 100 | 8 | 18 | 995 |
| 4 | 38 | 270 | 94 | 7 | 19 | 1000 |
| 5 | 41 | 290 | 105 | 10 | 21 | 1003 |
| 6 | 39 | 279 | 101 | 9 | 17 | 1003 |
| 7 | 40 | 281 | 97 | 11 | 15 | 1011 |

**Patentansprüche**

1. Melaminzubereitung aus 80 bis 99,9 Gew.% Melamin mit einer mittleren Korngröße von 0,01 bis 0,1 mm und 0,1 bis 20 Gew.% Cyanursäure, Chloriden oder Bromiden der Cyanursäure oder der Isocyanursäure, Ammelin oder Ammelid zur Herstellung einer stabilen Dispersion in Polyetherolen, wobei Melamin von 0 bis 50 % seines Gewichtes durch weitere Flammschutzmittel ersetzt sein kann.

2. Melaminzubereitung gemäß Anspruch 1, dadurch gekennzeichnet, daß sie 80 bis 99,3 Gew.% Melamin und 0,7 bis 20 Gew.% Cyanursäure, Chloride oder Bromide der Cyanursäure oder der Isocyanursäure, Ammelin oder Ammelid enthält.

3. Verwendung einer Melaminzubereitung aus 80 bis 99,9 Gew.% Melamin mit einer mittleren Korngröße von 0,01 bis 0,1 mm und 0,1 bis 20 Gew.% Cyanursäure, Chloriden oder Bromiden der Cyanursäure oder der Isocyanursäure, Ammelin oder Ammelid zur Herstellung einer stabilen Dispersion in Polyetherolen, wobei Melamin von 0 bis 50 % seines Gewichtes durch weitere Flammschutzmittel ersetzt sein kann.

4. Verwendung einer Melaminzubereitung gemäß Anspruch 3, dadurch gekennzeichnet, daß sie 80 bis 99,3 Gew.% Melamin und 0,7 bis 20 Gew.% Cyanursäure, Chloride oder Bromide der Cyanursäure oder der Isocyanursäure, Ammelin oder Ammelid enthält.

5. Stabile Dispersion von Melamin in Polyetherolen mit einem Gehalt von 20 bis 70 Gew.% Melamin sowie gegebenenfalls weiteren üblichen Zusätzen, dadurch gekennzeichnet, daß sie 0,1 bis 5 Gew.% Cyanursäure, Chloride oder Bromide der Cyanursäure oder der Isocyanursäure, Ammelin oder Ammelid enthält, daß die mittlere Korngröße des Melamins bei 0,01 bis 0,1 mm liegt, und daß Melamin von 0 bis 50 % seines Gewichtes durch weitere Flammschutzmittel ersetzt sein kann.

6. Stabile Dispersion nach Anspruch 5, dadurch gekennzeichnet, daß sie 0,5 bis 5 Gew.% Cyanursäure, Chloride oder Bromide der Cyanursäure oder der Isocyanursäure, Ammelin oder Ammelid enthält.

7. Stabile Dispersion nach Anspruch 5 oder 6, dadurch gekennzeichnet, daß die Polyetherole eine OH-Zahl von 20 bis 40 aufweisen.

6

8. Melaminzubereitung bzw. stabile Dispersion nach einem der Ansprüche 1 bis 7, dadurch gekennzeichnet, daß das gegebenenfalls zugesetzte weitere Flammschutzmittel Bisdibromneopentylglykolborsäureguanidin ist.

9. Verfahren zur Herstellung einer stabilen Dispersion nach einem der Ansprüche 5 bis 8, dadurch gekennzeichnet, daß 20 bis 70 Gew.% Melamin mit einer mittleren Korngröße von 0,01 bis 0,1 mm, wobei Melamin von 0 bis 50 % seines Gewichtes durch weitere Flammschutzmittel ersetzt sein kann, 0,1 bis 5 Gew.% Cyanursäure, Chloride oder Bromide der Cyanursäure oder der Isocyanursäure, Ammelin oder Ammelid, jeweils bezogen auf das Gesamtgewicht der Dispersion, sowie gegebenenfalls weitere übliche Zusätze in ein Polyetherol eingerührt und homogenisiert werden.

10. Verwendung einer Cyanursäure, Chloride oder Bromide der Cyanursäure oder der Isocyanursäure, Ammelin oder Ammelid enthaltenden, stabilen Dispersion von Melamin mit einer mittleren Teilchengröße von 0,01 bis 0,1 mm in Polyetherolen nach einem der Ansprüche 5 bis 8, zur Herstellung von schwerentflammbaren Polyurethanschaumstoffen.


**Claims**

1. Melamine preparation comprising 80 to 99.9% by weight of melamine having an average particle size of 0.01 to 0.1 mm and 0.1 to 20% by weight of cyanuric acid, chlorides or bromides of cyanuric acid or isocyanuric acid, ammeline or ammelide for preparing a stable dispersion in polyether polyols, in which 0 to 50% of the weight of melamine can be replaced by further flame retardants.

2. Melamine preparation according to Claim 1, characterized in that it contains 80 to 99.3% by weight of melamine and 0.7 to 20% by weight of cyanuric acid, chlorides or bromides of cyanuric acid or isocyanuric acid, ammeline or ammelide.

3. Use of a melamine preparation comprising 80 to 99.9% by weight of melamine having an average particle size of 0.01 to 0.1 mm and 0.1 to 20% by weight of cyanuric acid, chlorides or bromides of cyanuric acid or isocyanuric acid, ammeline or ammelide for preparing a stable dispersion in polyether polyols, in which 0 to 50% of the weight of melamine can be replaced by further flame retardants.

4. Use of a melamine preparation according to Claim 3, characterized in that it contains 80 to 99.3% by weight of melamine and 0.7 to 20% by weight of cyanuric acid, chlorides or bromides of cyanuric acid or isocyanuric acid, ammeline or ammelide.

5. Stable dispersion of melamine in polyether polyols, having a melamine content of 20 to 70% by weight and, if desired, further customary additives, characterized in that it contains 0.1 to 5% by weight of cyanuric acid, chlorides or bromides of cyanuric acid or isocyanuric acid, ammeline or ammelide, in that the average particle size of the melamine is 0.01 to 0.1 mm and in that 0 to 50% of the weight of melamine can be replaced by further flame retardants.

6. Stable dispersion according to Claim 5, characterized in that it contains 0.5 to 5% by weight of cyanuric acid, chlorides or bromides of cyanuric acid or isocyanuric acid, ammeline or ammelide.

7. Stable dispersion according to Claim 5 or 6, characterized in that the polyether polyols have an OH number of 20 to 40.

8. Melamine preparation or stable dispersion according to one of claims 1 to 7, characterized in that the further flame retardant, if added, is bis(dibromoneopentylglycol) guanidinium borate.

9. Process for the preparation of a stable dispersion according to one of Claims 5 to 8, characterized in that 20 to 70% by weight of melamine having an average particle size of 0.01 to 0.1 mm, it being possible for 0 to 50% of the weight of melamine to be replaced by further flame retardants, 0.1 to 5% by weight of cyanuric acid, chlorides or bromides of cyanuric acid or isocyanuric acid, ammeline or ammelide, each relative to the total weight of the dispersion, and, if desired, further customary additives are stirred into a polyether polyol and homogenized.

10. Use of a stable dispersion of melamine containing cyanuric acid, chlorides or bromides of cyanuric acid or isocyanuric acid, ammeline or ammelide and having an average particle size of 0.01 to 0.1 mm in polyether polyols according to one of Claims 5 to 8, for the production of flame-retardant polyurethane foams.

**Revendications**

1. Préparation de mélamine à raison de 80 à 99,9% en poids de mélamine avec une grosseur de grain moyenne entre 0,01 à 0,1 mm et 0,1 à 20 % en poids d'acide de cyanure, de chlorures ou de bromures d'acide de cyanure ou d'acide isocyanique, de l'ammeline ou de l'ammelide pour la fabrication d'une dispersion stable dans un polyétherol, la mélamine pouvant être remplacée à raison de 0 à 50% de son poids par d'autres agents pare-flammes.

2. Préparation de mélamine selon revendication 1, caractérisée par le fait qu'elle contient 80 à 99,3% en poids de mélamine et 0,7 à 20 % en poids d'acide de cyanure, de chlorures ou de bromures d'acide de cyanure ou d'acide isocyanique, de l'ammeline ou de l'ammelide.

3. Utilisation d'une préparation de mélamine à raison de 80 à 99,9% en poids de mélamine avec une grosseur de grain moyenne entre 0,01 à 0,1 mm et 0,1 à 20 % en poids d'acide de cyanure, de chlorures ou de bromures d'acide de cyanure ou d'acide isocyanique, de l'ammeline ou de l'ammelide pour la fabrication d'une dispersion stable dans un polyétherol, la mélamine pouvant être remplacée à raison de 0 à 50% de son poids par d'autres agents pare-flammes.

4. Utilisation d'une préparation de mélamine selon revendication 3, caractérisée par le fait qu'elle contient 80 à 99,3% en poids de mélamine et 0,7 à 20 % en poids d'acide de cyanure, de chlorures ou de bromures d'acide de cyanure ou d'acide isocyanique, de l'ammeline ou de l'ammelide.

5. Dispersion stable de mélamine dans un polyétherol avec une teneur de 20 à 70% en poids de mélamine et, le cas-échéant, d'autres additifs habituellement utilisés, caractérisée par le fait qu'elle contient 0,1 à 5 % en poids d'acide de cyanure, de chlorures ou de bromures d'acide de cyanure ou d'acide isocyanique, de l'ammeline ou de l'ammelide, que la grosseur moyenne de la mélamine se situe entre 0,01 à 0,1 mm et que la mélamine peut être remplacée, à raison de 0 à 50% de son poids par d'autres agents pare-flammes.

6. Dispersion stable selon revendication 5, caractérisée par le fait qu'elle contient 0,5 à 5 % en poids d'acide de cyanure, de chlorures ou de bromures d'acide de cyanure ou d'acide isocyanique, de l'ammeline ou de l'ammelide.

7. Dispersion stable selon revendication 5 ou 6, caractérisée par le fait que les polyétherols présentent un indice hydroxyle entre 20 à 40.

8. Préparation de mélamine ou dispersion stable selon l'une des revendications 1 à 7, caractérisée par le fait que l'autre agent pare-flamme ajouté est la bisdibromonéopentylglycol-acide-guanidine.

9. Procédé pour la fabrication d'une dispersion stable selon l'une des revendications 5 à 8, caractérisé par le fait que 20 à 70% en poids de mélamine d'une grosseur moyenne de grain de 0,01 à 0,1 mm, avec la mélamine pouvant être remplacée à raison de 0 à 50% de son poids par d'autres agents pare-flammes, 0,1 à 5 % en poids d'acide de cyanure, de chlorures ou de bromures d'acide de cyanure ou d'acide isocyanique, de l'ammeline ou de l'ammelide, par rapport au poids total de la dispersion et, le cas échéant, d'autres additifs, sont délayés dans le polyétherol et homogénéisés.

10. Utilisation d'une dispersion de mélamine avec une grosseur de grain moyenne de 0,01 à 0,1 mm dans des polyétherols contenant de l'acide de cyanure, des chlorures ou des bromures d'acide de cyanure ou d'acide isocyanique, de l'ammeline ou de l'ammelide, selon l'une des revendications 5 à 8, pour la fabrication de mousses de polyuréthane difficilement inflammables.